# EUROPÄISCHE PATENTSCHRIFT

(11) **EP 1 899 394 B1**
(45) Veröffentlichungstag und Bekanntmachung des Hinweises auf die Patenterteilung: **06.05.2009**
(21) Anmeldenummer: 06762318.1
(22) Anmeldetag: 30.06.2006
(51) Int. Cl.: C08G 18/08, C08G 18/42, C04B 24/28

(54) **AMPHIPHILE POLYMER-VERBINDUNGEN, VERFAHREN ZU IHRER HERSTELLUNG UND DEREN VERWENDUNG**
AMPHIPHILIC POLYMER COMPOUNDS, METHOD FOR THE PRODUCTION THEREOF AND THEIR USE
COMPOSES POLYMERES AMPHIPHILES, PROCEDE POUR LEUR PREPARER ET LEUR UTILISATION

(30) Priorität: 01.07.2005 DE 102005030828
(43) Veröffentlichungstag der Anmeldung: 19.03.2008
(73) Patentinhaber: Construction Research and Technology GmbH, 83308 Trostberg (DE); Evonik Goldschmidt GmbH, 45127 Essen (DE)
(72) Erfinder: INGRISCH, Stefan, 83376 Truchtlaching (DE); ALBRECHT, Gerhard, 83342 Tacherting (DE); THALER, Stefan, 83308 Trostberg (DE); BAUER, Mathias, 83308 Trostberg (DE)
(74) Vertreter: Böhm, Brigitte
(86) Internationale Anmeldenummer: PCT/EP2006/006387
(87) Internationale Veröffentlichungsnummer: WO 2007/003374

(56) Entgegenhaltungen:
- WO-A-00/23393
- DE-A1- 4 341 260
- DE-A1- 19 858 554
- US-A- 5 362 822

## Beschreibung

Die vorliegende Erfindung betrifft amphiphile Polymer-Verbindungen, Verfahren zu ihrer Herstellung und deren Verwendung als Zusatzmittel für hydraulisch abbindbare Baustoffmassen (wie z. B. Beton oder Mörtel), welches insbesondere zur Massenhydrophobierung und/oder zur Unterdrückung von Ausblühungen auf Oberflächen von gehärteten, hydraulisch abbindbaren Baustoffmassen eingesetzt wird.

Ein bekanntes Problem insbesondere bei Zement-basierten Baustoffmassen stellt das Auftreten von sog. Ausblühungen (Effloreszenz) dar, wobei man zwischen Primär- und Sekundärausblühungen unterscheidet. Die erstgenannten entstehen bereits beim Aushärten bspw. bei Beton, wobei die Kapillaren des Frischbetons mit einer wässrigen Lösung der wasserlöslichen Substanzen des Zementes, im Wesentlichen Calciumhydroxid, gefüllt sind. Beim Erhärten reagiert das Calciumhydroxid an der Betonoberfläche mit dem Kohlendioxid der Luft unter Bildung von schwerlöslichem Calciumcarbonat. Durch die Ausfällung von Calciumcarbonat ist die Calciumhydroxid-Konzentration an der Kapillarenmündung geringer als im Inneren der Kapillaren. Daher gelangt ständig neues Calciumhydroxid durch Diffusion aus den tieferen Schichten des Betons an die Kapillarenmündung und reagiert wiederum mit CO₂ zu Calciumcarbonat. Der entsprechende Prozess kommt erst zum Stillstand, wenn die Kapillarenmündungen durch Calciumcarbonat verschlossen sind. Besonders stark treten solche Primärausblühungen auf, wenn sich auf der Betonoberfläche ein Kondenswasserfilm befindet, weil sich dann das Calciumhydroxid über die gesamte Betonoberfläche verteilen kann und diese nach der Reaktion mit Kohlendioxid mit wasserunlöslichem Calciumcarbonat überziehen.

Darüber hinaus kann es auch bei der Freibewitterung von vollständig ausgehärtetem Beton zur Fleckenbildung kommen, die im Allgemeinen als Sekundärausblühungen bezeichnet werden. Diese Sekundärausblühungen dauern in der Regel 1 bis 2 Jahre, wobei als Ursache die langsame Bildung von wasserlöslichem Calciumhydrogencarbonat aus Calciumcarbonat angesehen wird.

Da das optische Aussehen von solchen mit Ausblühungen behafteten Bauelementen sehr stark beeinträchtigt ist, insbesondere bei farbigen Betonerzeugnissen, hat es nicht an Versuchen gefehlt, diese Effloreszenz durch verschiedene Maßnahmen zu verhindern bzw. zu unterdrücken.

Entsprechend dem Stand der Technik wurden hierzu zwei grundsätzliche Möglichkeiten vorgeschlagen, die jedoch alle nicht zu befriedigenden Ergebnissen geführt haben. Zum einen werden die Oberflächen von ausgehärteten Zement- oder Betonerzeugnissen mit speziellen Überzügen versehen, wobei vor allem verschiedene Silikat- und Acrylatbeschichtungen empfohlen wurden. Nachteilig bei diesem Verfahren ist jedoch die Tatsache, dass diese nachträglichen Beschichtungen relativ umständlich und unwirtschaftlich sind.

Aus diesem Grund hat man versucht, den Baustoffmassen vor deren Aushärtung geeignete Additive zuzusetzen, welche die Entstehung von Ausblühungen verhindern bzw. unterdrücken sollen.

So ist aus der DE 32 29 564 A1 bekannt, bei der Herstellung von eingefärbten Betonsteinen zusätzlich Kreide bspw. in Form einer wässrigen Kreideslurry zu verwenden. Hierdurch soll das Bildungsgefälle von Calciumcarbonat an der Oberfläche dadurch verschoben werden, dass bereits am Anfang des Erstarrungsprozesses überschüssiges Calciumcarbonat angeboten wird.

Schließlich wird gemäß der EP 92 242 A1 vorgeschlagen, zur Verhinderung von Ausblühungen dem Beton oberflächenaktive Polymere zuzusetzen. Diese oberflächenaktiven Polymere sollen beim Aushärten des Betons ihre Oberflächenaktivität irreversibel verlieren und dabei zu wasserunlöslichen Produkten umgewandelt werden.

In der Praxis haben sich derartige Hydrophobierungsmittel für ungehärtete Baustoffmassen nicht durchsetzen können, da sie unter den unterschiedlichen Witterungsbedingungen keine zuverlässige Wirkung aufweisen.

Der vorliegenden Erfindung lag daher die Aufgabe zugrunde, Mittel zur Verhinderung von Ausblühungen auf Oberflächen von gehärteten, hydraulisch abbindbaren Baustoffmassen und/oder zur Massenhydrophobierung bereitzustellen, welche die genannten Nachteile des Standes der Technik nicht aufweisen, sondern die Effloreszenz von hydraulisch abbindbaren Baustoffmassen wirkungsvoll und zuverlässig verhindern. Diese Aufgabe wurde erfindungsgemäß durch die Bereitstellung von amphiphilen Polymer-Verbindungen gelöst, welche dadurch hergestellt worden sind, dass man
a) eine Di-, Tri- oder Tetraglycidyl-Verbindung (A) mit einer ggf. ungesättigten Reaktivkomponente (B), bestehend aus einer C₈-C₂₈-Fettsäure, einem C₈-C₂₈-Alkohol oder einem C₈-C₂₈-sekundären Amin umsetzt, anschließend
b) das Umsetzungsprodukt aus Stufe a) mit einer aliphatischen oder aromatischen Polyisocyanat-Verbindung (C) reagieren lässt und schließlich
c) das Reaktionsprodukt aus Stufe b) mit einer Polyalkylenoxid-Verbindung (D) der allgemeinen Formel (I) 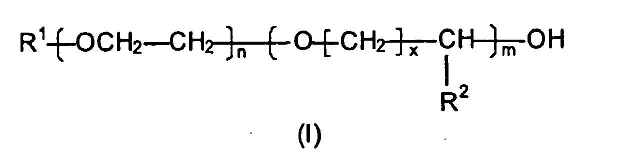 umsetzt, wobei
   - R¹ =: H, einen linearen oder verzweigten und ggf. ungesättigten aliphatischen Kohlenwasserstoff-Rest mit 1 bis 12 C-Atomen,
   - R² =: einen linearen oder verzweigten und ggf. ungesättigten alipha- tischen Kohlenwasserstoff-Rest mit 1 bis 30 C-Atomen oder Phenyl darstellen,
   - m =: 0 bis 250,
   - n =: 3 bis 350 und
   - x =: 1 bis 12
   bedeuten,
   und die Ethylenoxid- bzw. höheren Alkylenoxid-Einheiten in der Polyalkylenoxid-Verbindung (D) beliebig verteilt sein können.

Es hat sich hierbei überraschenderweise gezeigt, dass sich diese Polymer-Verbindungen ausgezeichnet als Mittel zur Verhinderung des Ausblühens und/oder zur Hydrophobierung von hydraulisch abbindbaren Baustoffmassen eignen. Außerdem nehmen die hydraulisch abbindbaren Produkte durch die erfindungsgemäßen Zusatzmittel deutlich weniger Wasser auf, wodurch sich Frostschäden und eine schnelle Verrostung des Bewehrungsstahls deutlich reduzieren lassen.

Die erfindungsgemäßen amphiphilen Polymer-Verbindungen sind durch ein dreistufiges Verfahren, umfassend die Reaktionsschritte a), b) und c), erhältlich.

In der ersten Reaktionsstufe a) wird eine Di-, Tri- oder Tetraglycidyl-Verbindung (A) mit einer Rekativkomponente (B) umgesetzt.

Als besonders vorteilhaft werden Glycidyl-Verbindungen eingesetzt, die ausgewählt sind aus der Gruppe Cyclohexan-dimethanol-diglycidylether Glycerin-triglycidylether, Neopentylglykol-diglycidylether, Pentaerythrittetraglycidylether, 1,6-Hexandiol-diglycidylether, Polypropylen-glykoldiglycidylether, Polyethylenglycol-diglycidylether, Trimethylolpropan-triglycidylether, Bisphenol A-diglycidylether, Bisphenol F-diglycidylether, 4,4 -Methylenbis (N,N-diglycidylanilin), Tetraphenylolethan-glycidylether, N,N-Diglycidylanilin, Diethylenglycol-diglycidylether, 1,4-Butandioldiglycidylether bzw. Mischungen daraus.

Es ist als erfindungswesentlich anzusehen, dass die Reaktivkomponente (B) aus einer C₈-C₂₈-Fettsäure, einem C₈-C₂₈-Alkohol oder einem C₈-C₂₈-sekundären Amin besteht, wobei die Reaktivkomponente gesättigte oder ungesättigte Reste aufweisen kann.

Aus der Gruppe der Fettsäuren sind Tallölfettsäure, Stearinsäure, Palmitinsäure, Sonnenblumenölfettsäure, Kokosölfettsäure (C₈-C₁₈), Kokosölfettsäure (C₁₂-C₁₈), Sojaölfettsäure, Leinölfettsäure, Dodecansäure, Ölsäure, Linolsäure, Palmkernölfettsäure, Palmölfettsäure, Linolensäure und/oder Arachidonsäure als bevorzugt anzusehen. Bei den C₈-C₂₈-Alkoholen haben sich vor allem 1-Eicosanol, 1-Octadecanol, 1-Hexadecanol, 1-Tetradecanol, 1-Dodecanol, 1-Decanol sowie 1-Octanol bewährt. Bei den sekundären Aminen mit C₈-C₂₈-C-Atomen werden insbesondere die Alkylamine aus der Gruppe 2-Ethylhexylamin, Dipentylamin, Dihexylamin, Dioctylamin, Bis(2-ethylhexyl)amin, N-Methyloctadecylamin sowie Didecylamin eingesetzt.

Das Mol-Verhältnis von Glycidyl-Komponente (A) zu der Reaktivkomponente (B) kann in weiten Grenzen variiert werden, doch hat es sich als besonders vorteilhaft erwiesen, dass pro Mol der Glycidyl-Gruppen von Komponente (A) 0,9 bis 1,1 Mol der Reaktivkomponente (B) eingesetzt werden.

In der zweiten Reaktionsstufe b) lässt man dann das Umsetzungsprodukt aus Stufe a) mit einer aliphatischen oder aromatischen Polyisocyanat-Verbindung (C) reagieren.

Als aliphatische Polyisocyanat-Verbindungen werden vorzugsweise 1-Isocyanato-5-isocyanatomethyl-3,3,5-trimethyl-cyclohexan (IPDI), Bis-(4-isocyanatocyclo-hexyl)-methan (H12MDI), 1,3-Bis-(1-isocyanato-1-methyl-ethyl)-benzol (m-TMXDI), 1,6-Diisocyanatohexan (HDI), ggf. dessen höhere Homologe bzw. technische Isomerengemische der einzelnen aliphatischen Polyisocyanate verwendet, während als aromatische Polyisocyanate insbesondere 2,4-Diisocyanatotoluol (TDI), Bis-(4-isocyanatophenyl)-methan (MDI) und ggf. dessen höhere Homologe (Polymeric MDI) bzw. technische Isomerengemische der einzelnen aromatischen Polyisocyanate eingesetzt werden.

Gemäß einer bevorzugten Ausführungsform wird die Polyisocyanat-Verbindung in einer solchen Menge eingesetzt, dass das NCO/OH-Äquivalent-Verhältnis bzgl. der freien OH-Gruppe im Umsetzungsprodukt von Glycidyl-Komponente (A) und Reaktivkomponente (B) aus Stufe a) 0,5 bis 2,0 beträgt.

In der nachfolgenden Reaktionsstufe c) setzt man das Reaktionsprodukt aus Reaktionsstufe b) mit einer Polyalkylenoxid-Verbindung (B) der allgemeinen Formel (I) um. 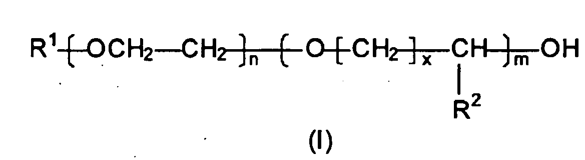 Hierbei bedeuten
- R¹ =: H, einen linearen oder verzweigten und ggf. ungesättigten alipha- tischen Kohlenwasserstoff-Rest mit 1 bis 12 C-Atomen,
- R² =: einen linearen oder verzweigten und ggf. ungesättigten alipha- tischen Kohlenwasserstoff-Rest mit 1 bis 30 C-Atomen oder Phenyl darstellen,
- m =: 0 bis 250,
- n =: 3 bis 350 und
- x =: 1 bis 12,
und die Ethylenoxid- bzw. höheren Alkylenoxid-Einheiten können in der Polyalkylenoxid-Verbindung (D) beliebig verteilt sein.

Es hat sich als besonders vorteilhaft erwiesen, dass man die Polyalkylenoxid-Verbindung (D) in einer Menge von 0,9 bis 1,1 Mol pro Mol an freien Isocyanat-Gruppen des Umsetzungsproduktes in Stufe b) verwendet.

Die Umsetzung der Glycidyl-Verbindung (A) mit der Reaktivkomponente (B) gemäß Stufe a) ist gemäß dem Stand der Technik hinreichend beschrieben worden. So wird die Umsetzung von Epoxyden mit Carbonsäuren in "Reaktionen der organischen Synthese", Cesare Ferri, 1. Auflage 1978, Seite 505 sowie in "Methoden der organischen Chemie", Houben-Weyl, 4. Auflage, Band 6/3, Seite 459 sowie Band 14/2, Seite 507 bis 510 beschrieben. Bzgl. der Umsetzung von Epoxyden mit Alkoholen sei auf "Methoden der organischen Chemie", Houben-Weyl, 4. Auflage, Band 6/3, Seite 40 bis 44 sowie Seite 456 bis 458 und Band 14/2, Seite 503 bis 506 sowie auf "Reaktionen der organischen Synthese", Cesare Ferri, 1. Auflage 1978, Seite 505 verwiesen. Die Umsetzung von Epoxyden mit Aminen wird bspw. in "Methoden der organischen Chemie", Houben-Weyl, 4. Auflage, Band 14/2, Seite 516 bis 523 sowie in "Reaktionen der organischen Synthese", Cesare Ferri, 1. Auflage 1978, Seite 504 bis 505 offenbart.

Vorzugsweise erfolgt die Umsetzung der Glycidyl-Komponente (A) mit der Reaktivkomponente (B) bei Temperaturen von 20 bis 250 °C, wobei die Reaktion ggf. in Gegenwart eines Katalysators erfolgen kann. So hat es sich als besonders vorteilhaft erwiesen, bei der Umsetzung der Glycidyl-Komponente (A) mit der Fettsäure als Reaktivkomponente (B) auf basische Katalysatoren, wie z.B. Tetraalkylammonium-Halogonide oder Alkalihydroxide, zurückzugreifen. Im Falle der Umsetzung der Glycidyl-Komponente (A) mit einem Alkohol als Reaktivkomponente (B) kann die Reaktion entweder Säuren-katalysiert (z. B. Schwefelsäure, Perchlorsäure, Fluorwasserstoffsäure, Bortrifluorid, Zinn (IV)-Chlorid) oder Basen-katalysiert (z. B. Alkalihydroxide, Alkalialkoholate, tertiäre Amine) durchgeführt werden.

Die Umsetzung der Glycidyl-Komponente (A) mit den sekundären Aminen als Reaktivkomponente (B) erfolgt in der Regel ohne Katalysator, doch können kleine Mengen an Wasser oder Alkohol (z. B. Phenol) dem Reaktionsgemisch zugegeben werden.

Die Reaktion des Umsetzungsproduktes aus Stufe a) mit der Polyisocyanat-Komponente (C) entsprechend der Reaktionsstufe b) erfolgt vorzugsweise ohne Lösemittel bei Temperaturen von 20 bis 120 °C, wobei gemäß einer bevorzugten Ausführungsform die Polyisocyanat-Komponente (C) vorgelegt und das Umsetzungsprodukt aus Stufe a) kontinuierlich zugegeben wird.

Die Reaktionsstufe c) bzgl. der Umsetzung des Reaktionsproduktes aus Stufe b) mit der Polyalkylenoxid-Verbindung (D) wird vorzugsweise ebenfalls ohne Lösemittel im Temperaturbereich von 20 bis 120 °C vorgenommen.

Die erfindungsgemäß vorgeschlagenen Polymer-Verbindungen eignen sich hervorragend zur Massenhydrophobierung von hydraulisch abbindbaren Baustoffmassen und/oder zur Unterdrückung von Ausblühungen auf Oberflächen von gehärteten, hydraulisch abbindbaren Baustoffmassen. Hierbei werden die Polymer-Verbindungen den angemachten und nicht ausgehärteten, hydraulisch abbindbaren Baustoffmassen in einer Menge von 0,01 bis 5 Gew.-%, bezogen auf den Bindemittelanteil, zugesetzt. Als hydraulisch abbindbare Baustoffmassen entsprechend der vorliegenden Erfindung sind alle Beton- und Mörtelsysteme anzusehen, die als Hauptbindemittel Zement bzw. Zementersatzstoffe wie bspw. Silikastaub, Hochofenschlacke oder Flugasche und als Nebenbestandteil ggf. noch Kalk, Gips oder Anhydrit enthalten. Es ist aber auch möglich, dass als Hauptbindemittel Calciumsulfat in Form von bspw. Gips, Anhydrit oder Halbhydrat und als Nebenbestandteil Zement, Silikastaub, Hochofenschlacke oder Flugasche zum Einsatz kommen.

Es ist im Rahmen der vorliegenden Erfindung jedoch auch möglich, dass die erfindungsgemäßen Zusatzmittel dem Anmachwasser bzw. Restwasser in emulgierter Form mit Hilfe von externen Emulgatoren (bspw. ethoxylierte Verbindungen, wie Fettsäureethoxylat, ethoxyliertes Rizinusöl oder ethoxyliertes Fettamin) zugesetzt werden.

Die erfindungsgemäß vorgeschlagenen Polymer-Verbindungen eignen sich hervorragend als Mittel zur Verhinderung bzw. Unterdrückung von Ausblühungen auf Oberflächen von gehärteten hydraulisch abbindbaren Baustoffmassen und/oder zur Hydrophobierung der entsprechenden zementären Systeme.

Außerdem nehmen die hydraulisch abbindbaren Produkte durch die erfindungsgemäß vorgeschlagenen Zusatzmittel deutlich weniger Wasser auf, wodurch sich Frostschäden und eine schnelle Verrostung des Bewehrungsstahls deutlich reduzieren lassen.

Die nachfolgenden Beispiele sollen die Erfindung näher veranschaulichen.

### Beispiele

### Beispiel 1

629,8 g (2,1717 mol) Tallölfettsäure (Fa. Hanf & Nelles) bei Raumtemperatur im Reaktionsgefäß vorlegen, 369,2 g (1,0859 mol) Bisphenol A diglycidylether (Handelsname: Polypox E 270/500; Fa. UPPC) zugeben und anschließend 1,0 g (0,0031 mol) Tetrabutylammoniumbromid (Fa. Aldrich) hinzufügen. Der Reaktionsraum wird mit Stickstoff gespült und das Reaktionsgemisch auf 150 °C erwärmt. Bei dieser Temperatur wird gehalten, bis eine Säurezahl < 2 erreicht ist.
Reaktionsdauer: ca. 8 h

### Beispiel 1 A

32,2 g (0,1849 mol) Toluoldiisocyanat (TDI; Fa. Aldrich) werden bei Raumtemperatur im Reaktionsgefäß vorgelegt und 4 Tropfen T12-DBTL (Katalysator; Fa. Aldrich) zugegeben. Vorlage im Reaktionsgefäß auf 30 °C erwärmen und 85,0 g (0,0924 mol) des Fettsäureadduktes aus Bsp. 1 über ca. 60 Min zudosieren. Die Reaktionstemperatur wird zwischen 40 - 50 °C gehalten. Nach vollständiger Zugabe des Fettsäureadduktes aus Bsp. 1 solange reagieren lassen, bis der für diese Stufe theoretische NCO-Wert (6,62 Gew.-%) erreicht ist. Ist der NCO-Sollwert erreicht, werden 92,4 g (0,1848 mol) MPEG 500 (Handelsname: Polyglycol M 500; Fa. Clariant) zudosiert. Die Reaktionstemperatur wird zwischen 50 - 60 °C gehalten.
Nach vollständiger Zugabe des MPEG 500 wird bei 50 - 60 °C nachgerührt, bis der NCO-Wert auf Null abgefallen ist. Das Reaktionsprodukt wird mit 1187,7 g Leitungswasser unter guter Rührwirkung vermischt, bis eine homogene gelblich trübe Dispersion (Feststoffgehalt 15 Gew.-%) entsteht.

### Beispiel 1 B

80 g (0,0870 mol) des Fettsäureadduktes aus Bsp. 1 bei Raumtemperatur im Reaktionsgefäß vorlegen und 4 Tropfen T12-DBTL (Katalysator; Fa. Aldrich) zugeben. Vorlage im Reaktionsgefäß auf 60 °C erwärmen und 20,1 g (0,1154 mol) Toluoldiisocyanat (TDI; Fa. Aldrich) über ca. 60 Min zudosieren. Die Reaktionstemperatur wird zwischen 60 - 70 °C gehalten. Nach vollständiger Zugabe des Toluoldiisocyanates lässt man reagieren, bis ein NCO-Wert von 2,42 Gew.-% erreicht ist. Anschließend werden 114,8 g (0,0574 mol) MPEG 2000 (Handelsname Polyglycol M 2000; Fa. Clariant) über ca. 60 Min. zudosiert. Die Reaktionstemperatur wird auf 60 - 70 °C gehalten. Es wird nachgerührt, bis der NCO-Wert auf Null abgefallen ist. Das Reaktionsprodukt wird mit 1217,8 g Leitungswasser unter guter Rührwirkung vermischt, bis eine homogene orange trübe Dispersion (Feststoffgehalt 15 Gew.-%) entsteht.

### Beispiel 1 C

300 g (0,3261 mol) Fettsäureaddukt aus Bsp. 1 werden bei Raumtemperatur im Reaktionsgefäß vorgelegt und 4 Tropfen T12-DBTL (Katalysator; Fa. Aldrich) zugegeben. Vorlage im Reaktionsgefäß auf 60 °C erwärmen und 28,4 g (0,1631 mol) Toluoldiisocyanat (TDI; Fa. Aldrich) über ca. 60 Min zudosieren. Die Reaktionstemperatur wird zwischen 60 - 70 °C gehalten. Das NCO/OH Verhältnis für diese Reaktion beträgt 0,50. Nach vollständiger Zugabe des Toluoldüsocyanates wird bei 60 - 70 °C nachgerührt, bis der NCO-Wert auf Null abgefallen ist. Das Reaktionsprodukt ist eine hellbraune viskose Flüssigkeit. 60 g eines Fettsäureethoxylates (Handelsname: Ethylan A3; Fa. AkzoNobel) werden im Reaktionsgefäß vorgelegt und auf 55 °C erwärmt. Dann werden 120 g des obigen Reaktionsproduktes auf 55 °C erwärmt und über 1 h zur Vorlage zugegeben. Es entsteht eine bräunlich weiße viskose Mischung. Anschließend werden 620 g Wasser über 1 h zudosiert. Man erhält schließlich eine milchig weiße Dispersion mit einem Feststoffgehalt von 15 Gew.-% bezogen auf das obige Reaktionsprodukt.

### Beispiel 2

631,8 g (2,2524 mol) Sonnenblumenölfettsäure (Fa. Hanf & Nelles) bei Raumtemperatur im Reaktionsgefäß vorlegen, 367,2 g (0,5632 mol) Pentaerythrittetraglycidylether (Handelsname: Polypox R16; Fa. UPPC) zugeben, anschließend 1,0 g (0,0031 mol) Tetrabutylammoniumbromid (Fa. Aldrich) hinzufügen. Der Reaktionsraum wird mit Stickstoff gespült und das Reaktionsgemisch auf 150 °C erwärmt. Bei dieser Temperatur wird gehalten, bis eine Säurezahl < 2 erreicht ist.
Reaktionsdauer: ca. 10 h

### Beispiel 2 A

62,83 g (0,3608 mol) Toluoldiisocyanat (TDI; Fa. Aldrich) bei Raumtemperatur im Reaktionsgefäß vorlegen und 4 Tropfen T12-DBTL (Katalysator von Firma Aldrich) zugeben. Vorlage im Reaktionsgefäß auf 30 °C erwärmen und 160,0 g (0,0902 mol) des Fettsäureadduktes aus Bsp. 2 über ca. 60 Min zudosieren. Die Reaktionstemperatur wird zwischen 30 - 40 °C gehalten. Nach vollständiger Zugabe des Fettsäureadduktes aus Bsp. 2 solange reagieren lassen, bis der für diese Stufe theoretische NCO-Wert (6,80 Gew.-%) erreicht ist. Ist der NCO-Sollwert erreicht, werden 92,4 g (0,1848 mol) MPEG 500 (Handelsname: Polyglycol M 500; Fa. Clariant) zudosiert. Die Reaktionstemperatur wird zwischen 40 - 50 °C gehalten. Nach vollständiger Zugabe des MPEG 500 wird bei 50 - 60 °C nachgerührt, bis der NCO-Wert auf Null abgefallen ist. Das Reaktionsprodukt wird mit 1187,7 g Leitungswasser unter guter Rührwirkung vermischt, bis eine homogene bräunlich trübe Dispersion (Feststoffgehalt 15 Gew.-%) entsteht.

### Beispiel 3

666,0 g (2,2966 mol) Tallölfettsäure (Fa. Hanf & Nelles) bei Raumtemperatur im Reaktionsgefäß vorlegen, 333,0 g (0,7655 mol)
Trimethylolpropantriglycidylether (Handelsname: Polypox R 20; Fa. UPPC) zugeben, anschließend 1,0 g (0,0031 mol) Tetrabutylammoniumbromid (Fa. Aldrich) hinzufügen. Der Reaktionsraum wird mit Stickstoff gespült und das Reaktionsgemisch auf 150 °C erwärmt. Bei dieser Temperatur wird gehalten, bis eine Säurezahl < 2 erreicht ist.
Reaktionsdauer: ca. 9 h

### Beispiel 3 A

57,5 g (0,2298 mol) 4,4'-Diphenylmethandiisocyanat (MDI; Fa. Aldrich) bei 50 °C im Reaktionsgefäß vorlegen und 4 Tropfen T12-DBTL (Katalysator von Firma Aldrich) zugeben. Vorlage im Reaktionsgefäß bei 50 °C halten und 100,0 g (0,0766 mol) des Fettsäureadduktes aus Bsp. 3 über ca. 60 Min zudosieren. Die Reaktionstemperatur wird bei ca. 60 °C gehalten. Nach vollständiger Zugabe des Fettsäureadduktes aus Bsp. 3 solange reagieren lassen, bis der für diese Stufe theoretische NCO-Wert (6,13 Gew.-%) erreicht ist. Ist der NCO-Sollwert erreicht, werden 114,9 g (0,2298 mol) MPEG 500 (Handelsname: Polyglycol M 500; Fa. Clariant) zudosiert. Die Reaktionstemperatur wird zwischen 60 - 70 °C gehalten. Nach vollständiger Zugabe des MPEG 500 wird bei 60 - 70 °C nachgerührt, bis der NCO-Wert auf Null abgefallen ist. Das Reaktionsprodukt wird mit 1543,6 g Leitungswasser unter guter Rührwirkung vermischt, bis eine homogene orange trübe Dispersion (Feststoffgehalt 15 Gew.-%) entsteht.

### Beispiel 4

643,4 g (2,2938 mol) Sonnenblumenölfettsäure (Fa. Hanf & Nelles) bei Raumtemperatur im Reaktionsgefäß vorlegen, 355,6 g (1,1471 mol) Neopentylglycoldiglycidylether (Handelsname: Polypox R14; Fa. UPPC) zugeben, anschließend 1,0 g (0,0031 mol) Tetrabutylammoniumbromid (Fa. Aldrich) hinzufügen. Der Reaktionsraum wird mit Stickstoff gespült und das Reaktionsgemisch auf 150 °C erwärmt. Bei dieser Temperatur wird gehalten, bis eine Säurezahl < 2 erreicht ist.
Reaktionsdauer: ca. 8 h

### Beispiel 4 A

160,0 g (0,1837 mol) des Fettsäureadduktes aus Bsp. 4 bei 50 °C im Reaktionsgefäß vorlegen und 4 Tropfen T12-DBTL (Katalysator; Fa. Aldrich) zugeben. Vorlage im Reaktionsgefäß bei 50 °C halten und 1/3 (16,0 g; 0,0919 mol) der Toluoldiisocyanat Menge (TDI; Fa. Aldrich) über ca. 40 Min zudosieren. Die Reaktionstemperatur wird bei 50 - 60 °C gehalten. Nach Zugabe der 1. Toluoldiisocyanat Menge solange reagieren lassen, bis der NCO-Wert auf Null angefallen ist. Anschließend werden die restlichen 2/3 (32,0 g; 0,1837 mol) der Toluoldiisocyanat Menge auf einmal zugegeben. Die Reaktionstemperatur wird zwischen 60 - 70 °C gehalten und man lässt solange reagieren, bis der für diese Stufe theoretische NCO-Wert (3,71 Gew.-%) erreicht ist. Anschließend werden 367,4 g (0,3674 mol) MPEG 1000 (Handelsname: Polyglycol M 1000; Fa. Clariant) über 60 Min zudosiert, die Temperatur wird bei 60-70°C gehalten. Man lässt nachrühren, bis der NCO-Wert auf Null abgefallen ist.
Das Reaktionsprodukt wird mit 2310,2 g Leitungswasser unter guter Rührwirkung vermischt, bis eine homogene, milchig gelbe Dispersion (Feststoffgehalt 15 Gew.-%) entsteht.

### Beispiel 4 B

55,5 g (0,2500 mol) Isophorondiisocyanat (IPDI; Fa. Aldrich) bei Raumtemperatur im Reaktionsgefäß vorlegen und 4 Tropfen T12-DBTL (Katalysator; Fa. Aldrich) zugeben. Vorlage im Reaktionsgefäß auf 45 °C erwärmen und 250,0 g (0,2500 mol) MPEG 1000 (Handelsname: Polyglycol M 1000; Fa. Clariant) über ca. 60 Min zudosieren. Die Reaktionstemperatur wird zwischen 40 - 50 ° C gehalten. Nach vollständiger Zugabe des MPEG 1000 solange reagieren lassen, bis der für diese Stufe theoretische NCO-Wert (3,44 Gew.-%) erreicht ist. Ist der NCO-Sollwert erreicht, werden 217,8 g (0,2500 mol) des Fettsäureadduktes aus Bsp. 4 auf einmal zugegeben. Die Reaktionstemperatur wird zwischen 50 - 60 °C gehalten. Anschließend wird nachgerührt, bis der NCO-Wert auf Null abgefallen ist. Das Reaktionsprodukt wird mit 2965,4 g Leitungswasser unter guter Rührwirkung vermischt, bis eine homogene, gelbliche, fast klare Lösung (Feststoffgehalt 15 Gew.-%) entsteht.

### Beispiel 4 C

304,85 g (0,3500 mol) Fettsäureaddukt aus Bsp. 4 werden bei Raumtemperatur im Reaktionsgefäß vorgelegt und 4 Tropfen T12-DBTL (Katalysator; Fa. Aldrich) zugegeben. Vorlage im Reaktionsgefäß auf 60 °C erwärmen und 40,64 g (0,2333 mol) Toluoldiisocyanat (TDI; Fa. Aldrich) über ca. 60 Min zudosieren. Die Reaktionstemperatur wird zwischen 60 - 70 °C gehalten. Das NCO/OH Verhältnis für diese Reaktion beträgt 0,66. Nach vollständiger Zugabe des Toluoldiisocyanates wird bei 60 - 70 °C nachgerührt, bis der NCO-Wert auf Null abgefallen ist. Das Reaktionsprodukt ist eine hellbraune viskose Flüssigkeit. 60 g eines ethoxylierten Rizinusöls (Handelsname: Berol 199; Fa. AkzoNobel) werden im Reaktionsgefäß vorgelegt und auf 55 °C erwärmt. Dann werden 120 g des obigen Reaktionsproduktes auf 55 °C erwärmt und über 1 h zur Vorlage zugegeben. Es entsteht eine bräunlich weiße, viskose Mischung. Anschließen werden 620 g Wasser über 1 h zudosiert. Man erhält schließlich eine milchig weiße Dispersion mit einem Feststoffgehalt von 15 Gew.-% bezogen auf das obige Reaktionsprodukt.

### Beispiel 5

605,9 g (2,1601 mol) Sonnenblumenölfettsäure (Fa. Hanf & Nelles) bei Raumtemperatur im Reaktionsgefäß vorlegen, 393,1 g (1,0799 mol) Bisphenol A diglycidylether (Handelsname: Araldit GY 240; Fa. Huntsman) zugeben, anschließend 1,0 g (0,0031 mol) Tetrabutylammoniumbromid (Fa. Aldrich) hinzufügen. Der Reaktionsraum wird mit Stickstoff gespült und das Reaktionsgemisch auf 150 °C erwärmt. Bei dieser Temperatur wird gehalten, bis eine Säurezahl < 2 erreicht ist.
Reaktionsdauer: ca. 8 h

### Beispiel 5 A

300 g (0,3243 mol) Fettsäureaddukt aus Bsp. 5 werden bei Raumtemperatur im Reaktionsgefäß vorgelegt und 4 Tropfen T12-DBTL (Katalysator; Fa. Aldrich) zugegeben. Vorlage im Reaktionsgefäß auf 60 °C erwärmen und 28,2 g (0,1622 mol) Toluoldiisocyanat (TDI; Fa. Aldrich) über ca. 60 Min zudosieren. Die Reaktionstemperatur wird zwischen 60 - 70 °C gehalten. Das NCO/OH Verhältnis für diese Reaktion beträgt 0,50. Nach vollständiger Zugabe des Toluoldiisocyanates wird bei 60 - 70 °C nachgerührt, bis der NCO-Wert auf Null abgefallen ist. Das Reaktionsprodukt ist eine hellbraune, viskose Flüssigkeit. 60 g eines ethoxylierten Rizinusöls (Handelsname: Berol 199; Fa. AkzoNobel) werden im Reaktionsgefäß vorgelegt und auf 55 °C erwärmt. Dann werden 120 g des obigen Reaktionsproduktes auf 55 °C erwärmt und über 1 h zur Vorlage zugegeben. Es entsteht eine bräunlich weiße, viskose Mischung. Anschließend werden 620 g Wasser über 1 h zudosiert. Man erhält schließlich eine milchig weiße Dispersion mit einem Feststoffgehalt von 15 Gew.-% bezogen auf das obige Reaktionsprodukt.

### Beispiel 5 B

92,5 g (0,1000 mol) des Fettsäureadduktes aus Bsp. 5 bei Raumtemperatur im Reaktionsgefäß vorlegen und 4 Tropfen T12-DBTL (Katalysator; Fa. Aldrich) zugeben. Vorlage im Reaktionsgefäß auf 60 °C erwärmen und 29,6 g (0,1333 mol) Isophorondiisocyanat (IPDI; Fa. Aldrich) über ca. 60 Min zudosieren. Die Reaktionstemperatur wird zwischen 60 - 70 °C gehalten. Nach vollständiger Zugabe des Toluoldiisocyanates lässt man reagieren bis ein NCO-Wert von 2,29 Gew.-% erreicht ist. Anschließend werden 133,3 g (0,0667 mol) MPEG 2000 (Handelsname Polyglycol M 2000; Fa. Clariant) über ca. 60 Min. zudosiert. Die Reaktionstemperatur wird auf 60 - 70 °C gehalten. Es wird nachgerührt, bis der NCO-Wert auf Null abgefallen ist. Das Reaktionsprodukt wird mit 1447,3 g Leitungswasser unter guter Rührwirkung vermischt, bis eine homogene, orange trübe Dispersion (Feststoffgehalt 15 Gew.-%) entsteht.

### Abprüfung der hergestellten Produkte

Die Probekörper werden nach folgender Methode hergestellt und auf ihr Ausblühverhalten geprüft:
Normgemäß wird in einem Zwangsmischer eine Mischung (11 kg) nach folgender Rezeptur hergestellt, wobei zunächst alle Aggregate 10 sec. trocken vermischt werden. Anschließend wird das Vorgabewasser zugegeben und 2 Min. gemischt, dann Zugabe des Restwassers, Mischdauer 2 Min. Das Zusatzmittel wird dem Restwasser zugegeben:

| | |
|---|---|
| 380 kg/m³ | Zement (Bernburg CEM I 42,5 R; 380 kg/m³) |
| 1104 kg/m³ | Sand 0/2 |
| 296 kg/m³ | Kies 2/5 |
| 296 kg/m³ | Kies 5/8 |
| 137 kg/m³ | Wasser |
| w/z: | 0,36 |

Das Zusatzmittel wird in unterschiedlichen Dosierungen bezogen auf den Zement in der Mischung eingesetzt und entweder dem Restwasser oder der Betonmischung beigefügt. Die Angaben der Dosierung des Zusatzmittels beziehen sich immer auf Feststoff "Zusatzmittel" zu Feststoff "Zement". Der Wassergehalt des Zusatzmittels wird von der Menge des Anmachwassers abgezogen.

Zur Herstellung der Prüfkörper werden jeweils genau 1300 g der frischen Betonmischung in runde Formen gegeben und mit einem Auflagegewicht von 30 kg auf einem Rütteltisch 90 sec. verdichtet. Anschließend wird der frische Probekörper entschalt und 2 Tage in einer Klimakammer (20 °C, 65% rel. LF) zur Aushärtung gelagert. Dann wird die Helligkeit der Probekörper mit einem Farbphotospektrometer (Color-Guide sphere spin, Byk Gardner) gemessen (L1), wobei auf die Probekörper eine Schablone mit 9 Messpunkten gelegt wird, damit später bei der 2. Messung die gleichen Punkte gemessen werden. Aus diesen 9 Punkten ergibt sich der Mittelwert L1. Im Anschluss werden die Steine für ca. 2 sec. in dest. Wasser getaucht und feucht in einem Plastiksack luftdicht verpackt. Dieser Sack wird in der Klimakammer 10 Tage gelagert. Anschließend werden die Steine ausgepackt und 2 Tage zur Trocknung in der Klimakammer gelagert. Nun werden die Helligkeiten der Probekörper ein 2. Mal mit Schablone und Farbphotospektrometer gemessen (L 2). Je Mischung werden 6 Probekörper gefertigt (und daraus der Mittelwert gebildet). Die farbliche Veränderung der Oberfläche (ΔL) der Probekörper (Zunahme an Weißgrad) ergibt sich als: ΔL = L2 - L1

Neben der Aufhellung (ΔL) der Probekörper durch die Ausblühungen, wurde auch die Homogenität der Oberfläche beurteilt, sowie die Wasseraufnahme der Probekörper bestimmt.

Bestimmung der Wasseraufnahme (WA) angelehnt an EN ISO 15148 :
Die trockenen und ausgehärteten Probekörper werden gewogen (W1) und so in ein Wasserbad gestellt, dass die Unterseite auf den Punktauflagen aufliegt und den Behälterboden nicht berührt. Wasserspiegel ca. 5 mm über der höchsten Stelle der Unterseite. Nach 15 Min. werden die Probekörper aus dem Wasserbad genommen und ein 2. Mal gewogen (W2). Der Prüfkörper wird vorher mit einem feuchten, ausgewrungenen Schwamm abgetrocknet. Die Wasseraufnahme ergibt sich als: WA = W2 - W1

**Tabelle 1 (Beschleunigte Ausblühung in der Klimakammer, 20°C, 65% rel. LF)**

| Bsp. | Dosierung [Gew.-%] | Helligkeitsdifferenz △L | Wasseraufnahme WA [g] | Beurteilung der Oberfläche |
|---|---|---|---|---|
| 1 A | 0,25 | 0,8 (7,9) -90% | 3,5 (58,0) -94% | einwandfrei |
| | 0,10 | 0,9 (7,9) -89% | 4,0 (58,0) - 93 % | einwandfrei |
| 1 B | 0,25 | 0,7 (7,9) - 91 % | 3,2 (58,0) -94% | einwandfrei |
| | 0,10 | 0,9 (7,9) -89% | 3,5 (58,0) - 94 % | einwandfrei |
| 1 C | 0,25 | 0,9 (7,9) - 89 % | 3,2 (58,0) -94% | einwandfrei |
| | 0,10 | 1,0 (7,9) -87% | 3,7 (58,0) - 94 % | einwandfrei |
| 2 A | 0,25 | 0,9 (9,0) - 90 % | 4,3 (52,7) -92% | einwandfrei |
| | 0,10 | 1,0 (9,0) -89% | 4,8 (52,7) -91% | einwandfrei |
| 3 A | 0,25 | 0,8 (8,2) - 90 % | 3,9 (48,3) -92% | einwandfrei |
| | 0,10 | 0,9 (8,2) -89% | 5,0 (48,3) -90% | einwandfrei |
| 4 A | 0,25 | 0,8 (8,7) - 91 % | 2,9 (51,1) -94% | einwandfrei |
| | 0,10 | 0,9 (8,7) -90% | 3,2 (51,1) -94% | einwandfrei |
| 4 B | 0,25 | 0,7 (8,7) - 92 % | 2,5 (51,1) - 95 % | einwandfrei |
| | 0,10 | 0,9 (8,7) -90% | 3,0 (51,1) -94% | einwandfrei |
| 4C | 0,25 | 0,9 (8,7) -90% | 2,2 (51,1) -96% | einwandfrei |
| | 0,10 | 1,1 (8,7) - 87 % | 2,5 (51,1) -95% | einwandfrei |
| 5 A | 0,25 | 0,9 (7,8) - 88 % | 2,6 (54,7) - 95 % | einwandfrei |
| | 0,10 | 1,0 (7,8) -87% | 3,0 (54,7) - 95 % | einwandfrei |
| 5 B | 0,25 | 0,8 (7,8) -90% | 2,9 (54,7) - 95 % | einwandfrei |
| | 0,10 | 1,0 (7,8) -87% | 3,3 (54,7) -94% | einwandfrei |

Die Werte in Klammern sind die Ergebnisse der Nullmischungen (ohne Zusatzmittel). Die Prozentwerte geben an, um wie viel das Zusatzmittel jeweils die Helligkeit bzw. die Wasseraufnahme im Vergleich zur Nullmischung (ohne Zusatzmittel) reduziert hat.
Die Dosierungen geben den Feststoff des Zusatzmittels bezogen auf den Zement in der Mischung an.

## Patentansprüche

1. Amphiphile Polymer-Verbindungen, welche **dadurch** hergestellt worden sind, dass man
a) eine Di-, Tri- oder Tetraglycidyl-Verbindung (A) mit einer ggf. ungesättigten Reaktivkomponente (B), bestehend aus einer C₈-C₂₈-Fettsäure, einem C₈-C₂₈-Alkohol oder einem C₈-C₂₈-sekundären Amin umsetzt,
anschließend
b) das Umsetzungsprodukt aus Stufe a) mit einer aliphatischen oder aromatischen Polyisocyanat-Verbindung (C) reagieren lässt und schließlich
c) das Reaktionsprodukt aus Stufe b) mit einer Polyalkylenoxid-Verbindung (D) der allgemeinen Formel (I) 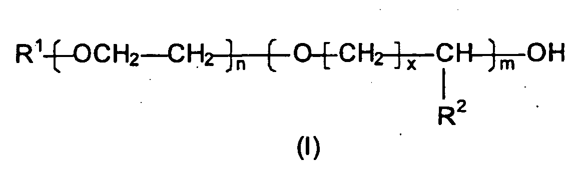 umsetzt, wobei
R¹ = H, einen linearen oder verzweigten und ggf. ungesättigten aliphatischen Kohlenwasserstoff-Rest mit 1 bis 12 C-Atomen,
R² = einen linearen oder verzweigten und ggf. ungesättigten alipha- tischen Kohlenwasserstoff-Rest mit 1 bis 30 C-Atomen oder Phenyl darstellen,
m = 0 bis 250,
n = 3 bis 350 und
x = 1 bis 12
bedeuten,
und die Ethylenoxid- bzw. höheren Alkylenoxid-Einheiten in de Polyalkylenoxid-Verbindung (D) beliebig verteilt sein können.

2. Polymer-Verbindungen nach Anspruch 1, **dadurch gekennzeichnet, dass** als Komponente (A) eine Glycidyl-Verbindung ausgewählt aus der Gruppe Cyclohexan-dimethanol-diglycidylether, Glycerin-triglycidylether, Neopentylglykol-diglycidylether, Pentaerythrit-tetraglycidylether, 1,6-Hexandiol-diglycidylether, Polypropylen-glykol-diglycidylether, Polyethylenglycol-diglycidylether, Trimethylolpropan-triglycidylether, Bisphenol A-diglycidylether, Bisphenol F-diglycidylether, 4,4'-Methylenbis (N,N-diglycidylanilin), Tetraphenylolethan-glycidylether, N,N-Diglycidylanilin, Diethylenglycol-diglycidylether, 1,4-Butandioldiglycidylether bzw. Mischungen daraus eingesetzt werden.

3. Polymer-Verbindungen nach Anspruch 1 oder 2, **dadurch gekennzeichnet, dass** als Reaktivkomponente (B) Fettsäuren aus der Gruppe Tallölfettsäure, Stearinsäure, Palmitinsäure, Sonnenblumenölfettsäure, Kokosölfettsäure (C₈-C₁₈), Kokosölfettsäure (C₁₂-C₁₈), Sojaölfettsäure, Leinölfettsäure, Dodecansäure, Ölsäure, Linolsäure, Palmkernölfettsäure, Palmölfettsäure, Linolensäure, Arachidonsäure verwendet werden.

4. Polymer-Verbindungen nach einem der Ansprüche 1 bis 3, **dadurch gekennzeichnet, dass** als Reaktivkomponente (B) Alkanole aus der Gruppe 1-Eicosanol, 1-Octadecanol, 1-Hexadecanol, 1-Tetradecanol, 1-Dodecanol, 1-Decanol, 1-Octanol eingesetzt werden.

5. Polymer-Verbindungen nach einem der Ansprüche 1 bis 4, **dadurch gekennzeichnet, dass** als Reaktivkomponente (B) Dialkylamine aus der Gruppe 2-Ethylhexylamin, Dipentylamin, Dihexylamin, Dioctylamin, Bis (2-ethylhexyl)amin, N-Methyloctadecylamin, Didecylamin, eingesetzt werden.

6. Polymer-Verbindungen nach einem der Ansprüche 1 bis 5, **dadurch gekennzeichnet, dass** pro Mol der Glycidyl-Gruppen von Komponente (A) 0,9 bis 1,1 Mol der Reaktivkomponente (B) eingesetzt werden.

7. Polymer-Verbindungen nach einem der Ansprüche 1 bis 6, **dadurch gekennzeichnet, dass** als aliphatische Polyisocyanate 1-Isocyanato-5-isocyanatomethyl-3,3,5-trimethyl-cyclohexan (IPDI), Bis-(4-isocyanatocyclo-hexyl)-methan (H12MDI), 1,3-Bis-(1-isocyanato-1-methyl-ethyl)-benzol (m-TMXDI), 1,6-Diisocyanatohexan (HDI), ggf. dessen höhere Homologe bzw. technische Isomerengemische der einzelnen aliphatischen Polyisocyanate verwendet werden.

8. Polymer-Verbindungen nach einem der Ansprüche 1 bis 6, **dadurch gekennzeichnet, dass** als aromatische Polyisocyanate 2,4-Diisocyanatotoluol (TDI), Bis-(4-isocyanatophenyl)-methan (MDI) und ggf. dessen höhere Homologe (Polymeric MDI) bzw. technische Isomerengemische der einzelnen aromatischen Polyisocyanate eingesetzt werden.

9. Polymer-Verbindungen nach einem der Ansprüche 1 bis 8, **dadurch gekennzeichnet, dass** die Polyisocyanat-Verbindung in einer solchen Menge eingesetzt wird, dass das NCO/OH-Äquivalent-Verhältnis bzgl. der freien OH-Gruppe im Umsetzungsprodukt von Glycidyl-Komponente (A) und Reaktivkomponente (B) aus Stufe a) 0,5 bis 2,0 beträgt.

10. Polymer-Verbindungen nach einem der Ansprüche 1 bis 9, **dadurch gekennzeichnet, dass** in Formel (I) bzgl. der Polyalkylenoxid-Verbindung (B) R für -CH₃, CH=CH₂- oder CH₂=CH-CH₂- steht.

11. Polymer-Verbindungen nach einem der Ansprüche 1 bis 10, **dadurch gekennzeichnet, dass** man die Polyalkylenoxid-Verbindung (D) in einer Menge von 0,9 bis 1,1 Mol pro Mol an freien Isocyanat-Gruppen des Umsetzungsproduktes in Stufe b) verwendet.

12. Verfahren zur Herstellung der Polymer-Verbindungen nach einem der Ansprüche 1 bis 11, **dadurch gekennzeichnet, dass** man
a) die Glycidyl-Komponente (A) mit der Reaktivkomponente (B) bei Temperaturen von 20 bis 250 °C ggf. in Gegenwart eines sauren oder basischen Katalysators umsetzt,
b) das Umsetzungsprodukt aus Stufe a) mit einer Polyisocyanat-Komponente (C) ohne Lösemittel im Temperaturbereich von 20 bis 120 °C weiterreagieren lässt
und schließlich
c) das Reaktionsprodukt aus Stufe b) mit der Polyalkylenoxid-Verbindung (D) ebenfalls ohne Lösemittel bei Temperaturen von 20 bis 150 °C zur Reaktion bringt.

13. Verwendung der Polymer-Verbindungen nach einem der Ansprüche 1 bis 11 zur Massenhydrophobierung von hydraulisch abbindbaren Baustoffmassen.

14. Verwendung nach Anspruch 13, **dadurch gekennzeichnet, dass** die Polymer-Verbindungen zur Unterdrückung von Ausblühungen auf Oberflächen von gehärteten, hydraulisch abbindbaren Baustoffmassen eingesetzt werden.

15. Verwendung nach einem der Ansprüche 13 oder 14, **dadurch gekennzeichnet, dass** die Polymer-Verbindungen der nicht ausgehärteten, hydraulisch abbindbaren Baustoffmasse in einer Menge von 0,001 bis 5 Gew.-%, bezogen auf den Bindemittelanteil, zugesetzt werden.

## Claims

1. Amphiphilic polymer compounds which have been prepared by
a) reacting a di-, tri- or tetraglycidyl compound (A) with an optionally unsaturated reactive component (B) consisting of a C₈-C₂₈-fatty acid, a C₈-C₂₈-alcohol or a secondary C₈-C₂₈-amine, subsequently
b) allowing the reaction product from stage a) to react with an aliphatic or aromatic polyisocyanate compound (C) and finally
c) reacting the reaction product from stage b) with a polyalkylene oxide compound (D) of the general formula (I) 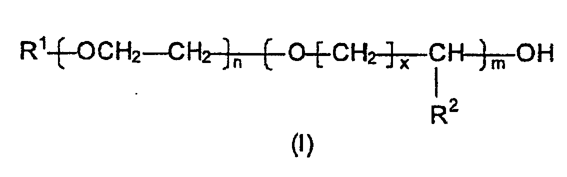 in which
R¹ is H or a linear or branched and optionally unsaturated aliphatic hydrocarbon radical having 1 to 12 C atoms,
R² is a linear or branched and optionally unsaturated aliphatic hydrocarbon radical having 1 to 30 C atoms or phenyl,
m is from 0 to 250,
n is from 3 to 350 and
x is from 1 to 12,
and the ethylene oxide or higher alkylene oxide units can be arbitrarily distributed in the polyalkylene oxide compound (D).

2. Polymer compounds according to claim 1, **characterized in that** a glycidyl compound selected from the group cyclohexanedimethanol diglycidyl ether, glyceryl triglycidyl ether, neopentyl glycol diglycidyl ether, pentaerythrityl tetraglycidyl ether, 1,6-hexanediol diglycidyl ether, polypropylene glycol diglycidyl ether, polyethylene glycol diglycidyl ether, trimethylolpropane triglycidyl ether, bisphenol A diglycidyl ether, bisphenol F diglycidyl ether, 4,4'-methylenebis(N,N-diglycidylaniline), tetraphenylolethane glycidyl ether, N,N-diglycidylaniline, diethylene glycol diglycidyl ether, 1,4-butanediol diglycidyl ether, or mixtures thereof are used as component A).

3. Polymer compounds according to claim 1 or 2, **characterized in that** fatty acids from the group tall oil fatty acid, stearic acid, palmitic acid, sunflower oil fatty acid, coconut oil fatty acid (C₈-C₁₈) coconut oil fatty acid (C₁₂-C₁₈), soybean oil fatty acid, linseed oil fatty acid, dodecanoic acid, oleic acid, linoleic acid, palm kernel oil fatty acid, palm oil fatty acid, linolenic acid, arachidonic acid are used as reactive component (B).

4. Polymer compounds according to any of claims 1 to 3, **characterized in that** alkanols from the group 1-eicosanol, 1-octadecanol, 1-hexadecanol, 1-tetradecanol, 1-dodecanol, 1-decanol, 1-ocatanol are used as reactive component (B).

5. Polymer compounds according to any of claims 1 to 4, **characterized in that** dialkylamines from the group 2-ethylhexylamine, dipentylamine, dihexylamine, dioctylamine, bis(2-ethylhexyl)amine, N-methyloctadecylamine, didecylamine are used as reactive component (B).

6. Polymer compounds according to any of claims 1 to 5, **characterized in that** from 0.9 to 1.1 mol of the reactive component (B) are used per mole of the glycidyl groups of component (A).

7. Polymer compounds according to any of claims 1 to 6, **characterized in that** 1-isocyanato-5-isocyanatomethyl-3,3,5-trimethylcyclohexane (IPDI), bis(4-isocyanatocyclohexyl)methane (H12MDI), 1,3-bis(1-isocyanato-1-methylethyl)benzene (m-TMXDI), 1,6-diisocyanatohexane (HDI), optionally the higher homologs thereof or industrial isomer mixtures of the individual aliphatic polyisocyanates are used as aliphatic polyisocyanates.

8. Polymer compounds according to any of claims 1 to 6, **characterized in that** 2,4-diisocyanatotoluene (TDI), bis(4-isocyanatophenyl)methane (MDI) and optionally the higher homologs thereof (polymeric MDI) or industrial isomer mixtures of the individual aromatic polyisocyanates are used as aromatic polyisocyanates.

9. Polymer compounds according to any of claims 1 to 8, **characterized in that** the polyisocyanate compound is used in an amount such that the NCO/OH equivalent ratio, based on the free OH group in the reaction product of glycidyl component (A) and reactive component (B) from stage a), is from 0.5 to 2.0.

10. Polymer compounds according to any of claims 1 to 9, **characterized in that,** in formula (I) relating to the polyalkylene oxide compound (B), R is -CH₃, CH=CH₂- or CH₂=CH-CH₂-.

11. Polymer compounds according to any of claims 1 to 10, **characterized in that** the polyalkylene oxide compound (D) is used in an amount of from 0.9 to 1.1 mol per mole of free isocyanate groups of the reaction product in stage b).

12. Method for the production of the polymer compounds according to any of claims 1 to 11, **characterized in that**
a) the glycidyl component (A) is reacted with the reactive component (B) at temperatures of from 20 to 250°C, optionally in the presence of an acidic or basic catalyst,
b) the reaction product from stage a) is allowed to react further with a polyisocyanate component (C) without a solvent in the temperature range from 20 to 120°C
and finally
c) the reaction product from stage b) is reacted with the polyalkylene oxide compound (D) likewise without a solvent at temperatures of from 20 to 150°C.

13. Use of the polymer compounds according to any of claims 1 to 11 for the mass hydrophobization of hydraulically settable building materials.

14. Use according to claim 13, **characterized in that** the polymer compounds are used for suppressing efflorescence on surfaces of hardened, hydraulically settable building materials.

15. Use according to either of claims 13 and 14, **characterized in that** the polymer compounds are added to the unhardened, hydraulically settable building material in an amount of from 0.001 to 5% by weight, based on the proportion of binder.

## Revendications

1. Composés polymères amphiphiles, qui sont **caractérisés en ce qu'**ils ont été obtenus
a) en faisant réagir un composé di-, tri- ou tétraglycidylique (A) avec un composant réactif (B) éventuellement insaturé, consistant en un acide gras en C₈-C₂₈, un alcool en C₈-C₂₈ ou une amine secondaire en C₈-C₂₈,
puis
b) en faisant réagir le produit de réaction de l'étape a) avec un composé polyisocyanate aliphatique ou aromatique (C)
et enfin
c) en faisant réagir le produit de réaction de l'étape b) avec un composé polyoxyalkylène (D) de formule générale (I) 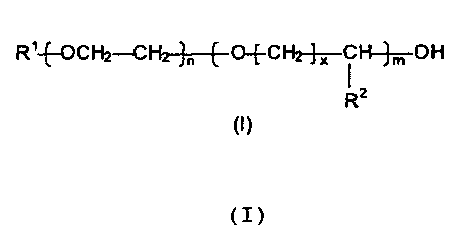 dans laquelle
R¹ représente H, un radical hydrocarboné aliphatique linéaire ou ramifié et éventuellement insaturé ayant de 1 à 12 atomes de carbone,
R² représente un radical hydrocarboné aliphatique linéaire ou ramifié et éventuellement insaturé ayant de 1 à 30 atomes de carbone ou phényle,
m = 0 à 250,
n = 3 à 350 et
x = 1 à 12,
et les groupes oxyde d'éthylène ou oxyde d'alkylène supérieurs dans le composé polyoxyalkylène (D) peuvent être distribués de façon quelconque.

2. Composés polymères selon la revendication 1, **caractérisés en ce qu'**on utilise en tant que composant (A) un composé glycidylique choisi dans l'ensemble constitué par l'éther diglycidylique de cyclohexane-diméthanol, l'éther triglycidylique de glycérol, l'éther diglycidylique de néeopentylglycol, l'éther tétraglycidylique de pentaérythritol, l'éther diglycidylique de 1,6-hexanediol, l'éther diglycidylique de polypropylèneglycol, l'éther diglycidylique de polyéthylèneglycol, l'éther triglycidylique de triméthylolpropane, l'éther diglycidylique de bisphénol A, l'éther diglycidylique de bisphénol F, la 4,4'-méthylène-bis(N,N-diglycidylaniline), l'éther glycidylique de tétraphényloléthane, la N,N-diglycidylaniline, l'éther diglycidylique de diéthylèneglycol, l'éther diglycidylique de 1,4-butanediol ou des mélanges de ceux-ci.

3. Composés polymères selon la revendication 1 ou 2, **caractérisés en ce qu'**on utilise en tant que composant réactif (B) des acides gras choisis dans le groupe constitué par l'acide gras de tallöl, l'acide stéarique, l'acide palmitique, l'acide gras de tournesol, l'acide gras d'huile de coprah (en C₈-C₁₈), l'acide gras d'huile de coprah (en C₁₂-C₁₈), l'acide gras d'huile de soja, l'acide gras d'huile de lin, l'acide dodécanoïque, l'acide oléique, l'acide linoléique, l'acide gras d'huile de palmiste, l'acide gras d'huile de palme, l'acide linolénique, l'acide arachidonique.

4. Composés polymères selon l'une quelconque des revendications 1 à 3, **caractérisés en ce qu'**on utilise en tant que composant réactif (B) des alcanols choisis dans l'ensemble constitué par le 1-eicosanol, le 1-octadécanol, le 1-hexadécanol, le 1-tétradécanol, le 1-dodécanol, le 1-décanol, le 1-octanol.

5. Composés polymères selon l'une quelconque des revendications 1 à 4, **caractérisés en ce qu'**on utilise en tant que composant réactif (B) des dialkylamines choisies dans l'ensemble constitué par la 2-éthylhexylamine, la dipentylamine, la dihexylamine, la dioctylamine, la bis(2-éthylhexyl)amine, la N-méthyloctadécylamine, la didécylamine.

6. Composés polymères selon l'une quelconque des revendications 1 à 5, **caractérisés en ce qu'**on utilise de 0,9 à 1,1 mole du composant réactif (B) par mole des groupes glycidyle du composant (A).

7. Composés polymères selon l'une quelconque des revendications 1 à 6, **caractérisés en ce qu'**on utilise en tant que polyisocyanates aliphatique le 1-isocyanato-5-isocyanatométhyl-3,3,5-triméthylcyclohexane (IPDI), le bis-(4-isocyanato-cyclohexyl)-méthane (H12MDI), le 1,3-bis-(1-isocyanato-1-méthyl-éthyl)-benzène (m-TMXDI), le 1,6-diisocyanatohexane (HDI), éventuellement leurs homologues supérieurs ou des mélanges industriels d'isomères des polyisocyanates aliphatiques individuels.

8. Composés polymères selon l'une quelconque des revendications 1 à 6, **caractérisés en ce qu'**on utilise en tant que polyisocyanates aromatiques le 2,4-diisocyanatotoluène (TDI), le bis-(4-isocyanatophényl)-méthane (MDI) et éventuellement ses homologues supérieurs (MDI polymère) ou des mélanges industriels d'isomères des polyisocyanates aromatiques individuels.

9. Composés polymères selon l'une quelconque des revendications 1 à 8, **caractérisés en ce qu'**on utilise le composé polyisocyanate en une quantité telle que le rapport d'équivalents de groupes NCO/ OH ou des groupes OH libres présents dans le produit de réaction du composant glycidylique (A) et du composant réactif (B) provenant de l'étape a) soit dans la plage de 0,5 à 2,0.

10. Composés polymères selon l'une quelconque des revendications 1 à 9, **caractérisés en ce que** dans la formule (I) relative au composé polyoxyalkylène (B), R représente -CH₃, CH=CH₂- ou CH₂=CH-CH₂-.

11. Composés polymères selon l'une quelconque des revendications 1 à 10, **caractérisés en ce qu'**on utilise le composé polyoxyalkylène (D) en une quantité de 0,9 à 1,1 mole par mole de groupes isocyanate libres du produit de réaction dans l'étape b).

12. Procédé pour la préparation des composés polymères selon l'une quelconque des revendications 1 à 11, **caractérisé en ce que**
a) on fait réagir le composant glycidylique (A) avec le composant réactif (B) à des températures de 20 à 250 °C, éventuellement en présence d'un catalyseur acide ou basique,
b) on fait ensuite réagir le produit de réaction de l'étape a) avec un composant polyisocyanate (C) sans solvant, dans la plage de température de 20 à 120 °C
et enfin
c) on fait réagir le produit de réaction de l'étape b) avec le composé polyoxyalkylène (D) également sans solvant, à des températures de 20 à 150 °C.

13. Utilisation des composés polymères selon l'une quelconque des revendications 1 à 11, pour l'imperméabilisation de matériaux de construction à prise hydraulique.

14. Utilisation selon la revendication 13, **caractérisée en ce que** les composés polymères sont utilisés pour réprimer l'efflorescence de surfaces de masses de matériaux de construction à prise hydraulique durcis.

15. Utilisation selon la revendication 13 ou 14, **caractérisée en ce que** les composés polymères sont ajoutés en une quantité de 0,001 à 5 % en poids, par rapport à la quantité de liant, à la masse de matériau de construction à prise hydraulique, non durcie.
